# EUROPÄISCHE PATENTANMELDUNG

(11) **EP 3 029 128 A1**
(43) Veröffentlichungstag der Anmeldung: **08.06.2016**
(21) Anmeldenummer: 14196427.0
(22) Anmeldetag: 05.12.2014
(51) Int. Cl.: C09K 21/02, C09D 5/18, C08K 3/00, C08L 75/02

(54) **Brandschutz-Zusammensetzung und deren Verwendung**

(71) Anmelder: HILTI Aktiengesellschaft, 9494 Schaan (LI)
(72) Erfinder: Lang, Martin, 82152 Planegg (DE); Simon, Sebastian, 86807 Buchloe Lindenberg (DE); Marauska, Juliane, 72766 Reutlingen (DE)
(74) Vertreter: Hilti Aktiengesellschaft Corporate Intellectual Property

(57) **Zusammenfassung**

Es wird eine Brandschutz-Zusammensetzung beschrieben, die ein Bindemittel auf Polyharnstoff-Basis enthält. Durch die erfindungsgemäße Zusammensetzung können in einfacher und schneller Weise Beschichtungen mit der für die jeweilige Feuerwiderstandsdauer erforderlichen Schichtdicke aufgetragen werden, wobei die Schichtdicke auf ein Minimum reduziert und dennoch eine gute Brandschutzwirkung erreicht werden kann. Die erfindungsgemäße Zusammensetzung eignet sich besonders für den Brandschutz, insbesondere als Beschichtung von Kabel und Kabeltrassen zur Erhöhung der Feuerwiderstandsdauer.

## Beschreibung

Die vorliegende Erfindung betrifft eine Brandschutz-Zusammensetzung, insbesondere eine ablativ wirkende Zusammensetzung, die ein Bindemittel auf Polyharnstoff-Basis enthält, sowie deren Verwendung für den Brandschutz, insbesondere für die Beschichtung von Bauteilen, wie Stützen, Trägern, Fachwerkstäben, Dämmsystemen, z.B. Weichschotts, Kabel, Kabelbündel oder Kabeltrassen zur Erhöhung der Feuerwiderstandsdauer.

Bei Bränden bilden Kabeltrassen aus mehreren Gründen besondere Gefahrenstellen. Zum einen tritt bei Bränden von mit Kunststoff isolierten Kabeln eine intensive Rauchentwicklung unter Emission schädlicher, z.T. giftiger Stoffe auf. Zum anderen kann sich entlang von Kabeltrassen ein Brand schnell ausbreiten und der Brand unter Umständen an eine vom ursprünglichen Brandherd weit entfernte Stelle gleitet werden. Bei Kabelanlagen besteht ferner das Problem, dass bei diesen Kabeln durch thermische Einwirkung oder Abbrand die Wirkung der Isolation nachlässt und durch Kurzschluss eine Unterbrechung des Stromflusses auftreten kann und damit die Kabel zerstört werden.

Elektrische Kabel und Leitungen werden häufig in Fluren verlegt und in die angrenzenden Räume unterteilt. Diese Flure dienen im Brandfall als Flucht- und Rettungswege, die bei Bränden von Kabelinstallationen durch Rauchentwicklung und toxische Brandgase unbenutzbar werden, wobei z. B. brennendes PVC stark korrosive Gase freisetzt. Kabelmassierungen stellen somit insbesondere im Industriebau, in Kraftwerksanlagen, in Krankenhäusern, Groß- und Verwaltungsbauten und generell in Gebäuden- mit hoher Installationsdichte ein erhebliches Gefahrenpotential dar. Die Kabelisolierungen sind in diesen Gebäuden oft die maßgebliche Brandlast und verursachen lang andauernde Brände mit Brandraumtemperaturen in ungünstigsten Fällen bis über 1000°C. Aus den genannten Gründen ist Kabeltrassen in Bezug auf Brandschutzmaßnahmen besondere Beachtung zu schenken.

Um diese Gefährdungen der fehlenden Funktionsfähigkeit der Kabel und der starken Brandlasterhöhung durch die Kabel zumindest zeitlich begrenzt zu verhindern, ist es bekannt, die Kabel durch unbrennbare Baustoffe der Baustoffklasse A1 oder A2 räumlich zu trennen, in dem die Kabel z.B. in Installations- und/oder Funktionserhaltkanälen verlegt werden. Dieses erfordert jedoch räumlich aufwendige Konstruktionen, die das Gewicht der Installations- und/oder Funktionserhaltkanäle berücksichtigen müssen. Dazu werden häufig Kabel und Kabeltrassen mit isolierenden Materialien umwickelt, wie Aluminiumoxid-Silika-Matten oder Mineralwollmatten. Um einen ausreichenden Brandschutz zu erreichen, muss das Material sehr dick sein. Dies führt jedoch zu Problemen hinsichtlich der Abstände zwischen dem geschützten Gegenstand und benachbarten oder überlagerten Gegenständen hervor. Darüber hinaus verursachen diese Materialien aufgrund ihrer thermischen Isoliereigenschaften Probleme bei Normalbetrieb. Eines dieser Probleme wird als "Herabsetzung der Strombelastbarkeit" bezeichnet. Dies bedeutet, dass die durch elektrische Kabel in dem Kabelrohr oder der Kabeltrasse erzeugte Wärme im Bereich der Isolierung nicht mehr abgeführt werden kann, was dazu führt, dass der in diesen Kabeln zulässige sichere Strombetriebspegel verringert wird oder dass eine Überhitzung der Kabel erfolgt. Diese Nachteile machen diese Art des Brandschutzes sehr unflexibel hinsichtlich deren Einsatzbereichs.

Zur Vermeidung dieser Nachteile ist es auch bekannt, für den Schutz elektrischer Kabel Beschichtungen aufzubringen, die im Brandfall unter thermischer Einwirkung aufschäumen und so eine Dämmschicht bilden oder die durch physikalische und chemische Prozesse Wärme aufnehmen und so kühlend wirken.

Mit dämmschichtbildenden Beschichtungen ist es möglich, die Teilnahme von Kabeln am Brandgeschehen für 30 Minuten oder länger zu verhindern. Derartige beschichtete Kabel werden oft auf Kabeltrassen verlegt. Hierbei hat es sich jedoch gezeigt, dass bei vertikaler oder geneigter Anordnung der Kabeltrassen auch ein vollständig aufgeschäumter Dämmschichtbildner die Brandausbreitung ohne zusätzliche Maßnahmen nicht verhindern kann. Während der Erwärmung verformen sich die Kabel zwischen den Kabelschellen so stark, dass die Dämmschicht bildende Beschichtung aufreißt und teilweise abplatzt. Entstehender Schaum löst sich dabei ebenfalls von den Kabeln und tropft ab. Bei nach Verlegung der Kabel erfolgter Beschichtung sind die Kabel im Bereich der Schellenkonstruktionen nicht in vollem Umfang zugänglich. Dies hat zur Folge, dass bei vertikal oder geneigter Anordnung der Kabeltrassen im Brandfall im Bereich der Schellenkonstruktionen nur ein Schaum geringer Dicke entsteht, der als Brandschutz für 30 Minuten nicht mehr ausreicht. Bei Verlegung von PVC-Kabeln treten daher wieder die im Brandfall bekannten Probleme auf.

Es ist auch bekannt, flammwidrig bzw. schwer entflammbar ausgerüstete halogenfreie Kabel zu verwenden, die nur schwer entflammbar und raucharm sind und nur eine geringe Brandweiterleitung besitzen. Diese Kabel sind jedoch sehr teuer und kommen daher nur unter extrem gefährdeten Bedingungen zum Einsatz.

Zur Vermeidung der Nachteile dämmschichtbildender Beschichtungen wurden bei Kabeltrassen Materialen auf die Kabel und Kabelhalterungen aufgebracht, die einen Ablationseffekt zeigen, d.h. unter Hitzeeinwirkung kühlend wirken und keramisieren, wie beispielsweise in der DE 196 49 749 A1 beschrieben. Hierin wird ein Verfahren zur Ausbildung eines Brandschutzes für brennbare oder hitzegefährdete Bauteile beschrieben, wobei die Bauteile mit einer Beschichtung versehen werden, die als Bindemittel ein anorganisches Material aus feingemahlenen hydraulischen Bindemitteln wie Calcium-Silicat, -Aluminat oder -Ferrit enthält, dem Ablativstoffe wie Aluminium- oder MagnesiumHydroxid zugesetzt ist. Nachteil an dieser Maßnahme ist, dass einerseits das Aufbringen des den Ablationseffekt zeigenden Materials zeitintensiv ist und andererseits die Haftung des Materials an den Kabeln und den Kabelhalterungen ein Problem darstellt.

Andere derzeit auf dem Markt befindlichen Beschichtungssysteme, welche einige der oben erwähnten Nachteile nicht aufweisen sind einkomponentige Beschichtungszusammensetzungen auf der Basis von Polymerdispersionen, die sich endotherm zersetzende Verbindungen enthalten. Nachteilig an diesen Beschichtungen ist zum einen die relativ lange Trocknungsdauer der Beschichtung und damit einhergehende geringe Trockenschichtdicke, da diese Systeme physikalisch, d.h. durch Verdunstung des Lösungsmittels trocknen. Daher sind für dickere Beschichtungen mehrere nacheinander folgende Auftragungen erforderlich, was diese Systeme ebenfalls zeit- und arbeitsintensiv und daher unwirtschaftlich macht.

Der Erfindung liegt die Aufgabe zugrunde, ein ablativ wirkendes Beschichtungssystem der eingangs erwähnten Art zu schaffen, das die genannten Nachteile vermeidet, das insbesondere nicht lösemittel- oder wasserbasiert ist und eine schnelle Aushärtung aufweist, aufgrund entsprechend abgestimmter Viskosität einfach aufzutragen ist und aufgrund des erreichbaren hohen Füllgrades nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine Brandschutz-Zusammensetzung mit einem Bestandteil A, der eine Isocyanatverbindung enthält, mit einem Bestandteil B, der eine gegenüber Isocyanatverbindungen reaktionsfähige Reaktivkomponente enthält, die unter Verbindungen mit mindestens zwei Aminogruppen ausgewählt ist, wobei die Aminogruppen unabhängig voneinander primäre und/oder sekundäre Aminogruppen sind und/oder aus Verbindungen von Polyolen ausgewählt und mit einem Bestandteil C, der ein ablativ wirkendes Brandschutzadditiv enthält.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass die Aushärtezeiten gegenüber anderen bekannten Systemen wie Systemen auf Lösemittel- oder Wasserbasis deutlich verkürzt werden konnten, das die Arbeitszeit erheblich verringert.

Ein weiterer Vorteil liegt darin, dass die erfindungsgemäße Zusammensetzung einen hohen Füllgrad mit den Brandschutzadditiven aufweisen kann, so dass selbst mit dünnen Schichten eine große isolierende Wirkung erreicht wird. Der mögliche hohe Füllgrad der Zusammensetzung kann selbst ohne die Verwendung von leicht flüchtigen Lösungsmitteln erreicht werden. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet, sondern chemisch über eine Additionsreaktion härtet. Damit erleiden die Zusammensetzungen keinen Volumenverlust durch das Abtrocknen von Lösemitteln oder bei wasserbasierten Systemen von Wasser. So ist bei einem klassischen System ein Lösemittelgehalt von etwa 25 % typisch. Dies bedeutet, dass aus einer 10 mm-Nassfilmschicht nur 7,5 mm als eigentliche Schutzschicht auf dem zu schützenden Substrat verbleiben. Bei der erfindungsgemäßen Zusammensetzung verbleiben mehr als 95 % der Beschichtung auf dem zu schützenden Substrat.

Im Brandfall erweicht das Bindemittel und die darin erhaltenen Brandschutzadditive zersetzen sich abhängig von den verwendeten Additiven in einer endothermen physikalischen oder chemischen Reaktion unter Bildung von Wasser und inerten Gasen, was zum einen zur Kühlung der Kabel und zum anderen zur Verdünnung der brennbaren Gase oder durch Ausbilden einer Schutzschicht, die das Substrat vor Wärme- und Sauerstoffangriff schützt, führt und zum anderen die Ausbreitung des Feuers durch den Abbrand der Beschichtung verhindert.

Die erfindungsgemäßen Zusammensetzungen zeigen eine ausgezeichnete Haftung an unterschiedlichen Untergründen verglichen mit lösemittel- oder wasserbasierten Systemen, wenn diese ohne Grundierung aufgetragen werden, so dass sie universell eingesetzt werden können und nicht nur an den zu schützenden Leitungen sondern auch anderen Trägermaterialien haften.

Zum besseren Verständnis der Erfindung werden die folgenden Erläuterungen der hierin verwendeten Terminologie als sinnvoll erachtet. Im Sinne der Erfindung:
- umfasst der Begriff *"aliphatische Verbindung"* acyclische und cyclische, gesättigte oder ungesättigte Kohlenwasserstoffverbindungen, die nicht aromatisch sind (PAC, 1995, 67, 1307; Glossary of class names of organic compounds and reactivity intermediates based on structure (IUPAC Recommendations 1995));
- bedeutet *"Polyamin"* eine gesättigte, offenkettige oder cyclische organische Verbindung, die insbesondere im Falle der offenkettigen Verbindungen, primäre Aminogruppen (-NH₂) an den Kettenenden aufweist und die gegebenenfalls von einer wechselnden Anzahl sekundärer Aminogruppen (-NH-) unterbrochen ist; der Begriff "Polyamin" umfasst auch Polyetheramine, auch alkoxylierte Polyamine oder Polyoxyalkenpolyamine genannt, d.h. Verbindungen mit aliphatisch gebundenen Aminogruppen, wobei die Aminogruppen an die Enden eines Polyethergerüstes angebunden sind;
- bedeutet *"organischer Rest"* ein Kohlenwasserstoffrest, der gesättigt oder ungesättigt, substituiert oder unsubstituiert, aliphatisch, aromatisch oder araliphatisch sein kann; wobei *"araliphatisch"* bedeutet, dass sowohl aromatische als auch aliphatische Reste enthalten sind;
- bedeutet *"ablativ wirkend",* dass bei Einwirken erhöhter Temperaturen, d.h.
   oberhalb von 200°C, wie sie etwa im Brandfall auftreten können, eine Reihe von chemischen und physikalischen Reaktionen erfolgen, die Energie in Form von Wärme benötigen, wobei diese Energie der Umgebung entzogen wird; dieser Begriff wird gleichbedeutend mit dem Begriff *"endotherm zersetzend"* verwendet.

Als Isocyanatverbindung können alle dem Fachmann bekannten aliphatischen und/oder aromatischen Isocyanate einer mittleren NCO-Funktionalität von 2 oder größer, einzeln oder in beliebigen Mischungen untereinander verwendet werden.

Beispiele für aromatische Polyisocyanate sind 1,4-Phenylendiisocyanat, 2,4- und/oder 2,6-Toluylendiisocyanat, Xylylendiisocyanat, hydriertes Xylylendiisocyanat, Tetramethylxylylendiisocyanat, 1,5-Naphthylendiisocyanat, Diphenylenmethan-2,4'-und/oder -4,4'-diisocyanat, Triphenylmethan-4,4',4"-triisocyanat und Bis- und Tris-(isocyanatoalkyl)-benzole, -toluole sowie -xylole.

Bevorzugt werden Isocyanate aus der Reihe der aliphatischen Vertreter, wobei diese ein Kohlenstoffgrundgerüst (ohne die enthaltenen NCO-Gruppen) von 3 bis 30, bevorzugt 4 bis 20 Kohlenstoffatomen aufweisen. Beispiele für aliphatische Polyisocyanate sind Bis-(isocyanatoalkyl)ether oder Alkandiisocyanate, wie Propandiisocyanate, Butandiisocyanate, Pentandiisocyanate, Hexandiisocyanate (z.B. Hexamethylendiisocyanat, HDI), Heptandiisocyanate, Octandiisocyanate, Nonandiisocyanate (z.B. Trimethyl-HDI (TMDI) in der Regel als Gemisch der 2,4,4- und 2,2,4-Isomeren), 2-Methylpentan-1,5-diisocyanat (MPDI), Nonantriisocyanate (z.B. 4-Isocyanatomethyl-1,8-octandiisocyanat), Dekandiisocyanate, Dekantriisocyanate, Undekandiisocyanate, Undekantriisocyanate, Dodecandiisocyanate, Dodecantriisocyanate, 1,3- sowie 1,4-Bis-(isocyanatomethyl)cyclohexane (H₆XDI), 3-Isocyanatomethyl-3,5,5-trimethylcyclohexylisocyanat (Isophorondiisocyanat, IPDI), Bis-(4-isocyanatocyclohexyl)methan (H₁₂MDI), Bis-(isocyanatomethyl)norbornan (NBDI) oder 3(4)-Isocyanatomethyl-I-methyl-cyclohexylisocyanat (IMCI).

Besonders bevorzugte Isocyanate sind Hexamethylendiisocyanat (HDI), Trimethyl-HDI (TMDI), 2-Methylpentan-1,5-diisocyanat (MPDI), Isophorondiisocyanat (IPDI), 1,3- sowie 1,4-Bis(isocyanatomethyl)cyclohexan (H₆XDI), Bis(isocyanatomethyl)norbornan (NBDI), 3(4)-Isocyanatomethyl-1-methyl-cyclohexylisocyanat (IMCI) und/oder 4,4'-Bis(iso-cyanatocyclohexyl)methan (H₁₂MDI) oder Gemische dieser Isocyanate.

Stärker bevorzugt liegen die Polyisocyanate als Präpolymere, Biurete, Isocyanurate, Iminooxadiazindione, Uretdione und/oder Allophanate, hergestellt durch Umsetzung mit Polyolen oder Polyaminen, einzeln oder als Gemisch vor und haben eine mittlere Funktionalität von 2 oder größer

Beispiele geeigneter, kommerziell erhältlicher Isocyanate sind Desmodur® N 3900, Desmodur® N 100, Desmodur® N 3200, Desmodur® N 3300, Desmodur® N 3600, Desmodur® N 3800, Desmodur® XP 2675, Desmodur® 2714, Desmodur® 2731, Desmodur® N 3400, Desmodur® XP 2580, Desmodur® XP 2679, Desmodur® XP 2731, Desmodur® XP 2489, Desmodur® E 305, Desmodur® E 3370, Desmodur® XP 2599, Desmodur® XP 2617, Desmodur® XP 2406, Desmodur® VL, Desmodur® VL 50, Desmodur® VL 51 (jeweils der Bayer MaterialScience AG), Tolonate HDB, Tolonate HDT (Rhodia), Basonat HB 100 und Basonat HI 100 (BASF).

Die als gegenüber Isocyanatverbindungen reaktionsfähige Reaktivkomponente verwendbaren Amine umfassen alle Verbindungen mit mindestens zwei Aminogruppen, wobei die Aminogruppen primäre und/oder sekundäre Aminogruppen sind, die in der Lage sind, mit Isocyanatgruppen unter Bildung einer Harnstoffgruppe (-N-C(O)-N-) zu reagieren, wobei diese Verbindungen dem Fachmann bekannt sind.

In einer Ausführungsform der Erfindung ist die gegenüber Isocyanatverbindungen reaktionsfähige Reaktivkomponente ein Polyamin, wie z. B. 1,2-Diaminocyclohexan, 4,4'-Diaminodiphenylsulfon, 1,5-Diamino-2-methylpentan, Diethylentriamin, Hexamethylendiamin, Isophorondiamin, Triethylentetramin, Trimethylhexamethylendiamin und 5-Amino-1,3,3-trimethylcyclohexan-1-methylamin.

Diese Polyamine sind gegenüber Isocyanatgruppen hoch reaktiv, so dass die Reaktion zwischen der Aminogruppe und der Isocyanatgruppe innerhalb weniger Sekunden erfolgt.

Bevorzugt werden daher Verbindungen, die weniger schnell mit den Isocyanatgruppen reagieren, wie die sogenannten Polyetherpolyamine. Die Polyetherpolyamine, auch alkoxylierte Polyamine oder Polyoxyalkenpolyamine genannt, umfassen Verbindungen mit aliphatisch gebundenen Aminogruppen, d.h. die Aminogruppen sind an die Enden eines Polyethergerüstes angebunden. Das Polyethergerüst basiert auf reinen oder gemischten Polyalkylenoxideinheiten, wie Polyethylenglykol- (PEG), Polypropylenglykol- (PPG). Das Polyethergerüst ist durch Umsetzung eines Di- oder Trialkoholinitiators mit Ethylenoxid (EO) und/oder Propylenoxid (PO) und anschließender Umwandlung der terminalen Hydroxylgruppen zu Aminogruppen erhältlich.

Geeignete Polyetherpolyamine werden durch folgende allgemeine Formel (I) dargestellt 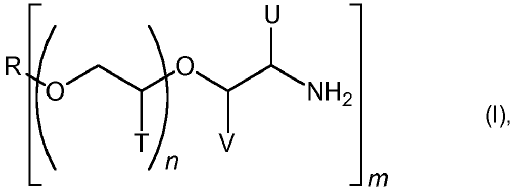 in der
- R: der Rest eines Initiators für die Oxyalkylierung ist mit 2 bis 12 Kohlenstoffatomen und 2 bis 8 Gruppen mit aktiven Wasserstoffatomen,
- T: Wasserstoff oder eine C₁-C₄-Alkylgruppe darstellt,
- V und U: unabhängig voneinander Wasserstoff oder T sind,
- n: ein Wert zwischen 0 und 100 ist,
- m: eine ganze Zahl zwischen 2 und 8 ist, wobei m der Anzahl der Gruppen mit einem aktiven Wasserstoffatom entspricht, die ursprünglich in dem Initiator für die Oxyalkylierung enthalten waren.

In weiteren Ausführungsformen hat n einen Wert zwischen 35 und 100 oder weniger als 90, weniger als 80 und weniger als 70 oder weniger als 60. In einer weiteren Ausführungsform hat R 2 bis 6 oder 2 bis 4 oder 3 Gruppen mit aktiven Wasserstoffatomen, insbesondere Hydroxylgruppen. In einer anderen Ausführungsform ist R ein aliphatischer Initiator mit mehreren aktiven Wasserstoffatomen. In einer weiteren Ausführungsform sind T, U und V jeweils Methylgruppen.

In diesem Zusammenhang wird Bezug genommen auf das Patent US 4,940,770 und die Anmeldungen DE 26 09 488 A1 und WO 2012/030338 A1, deren Inhalte hiermit in diese Anmeldung aufgenommen werden.

Beispiele geeigneter Polyetheramine sind die von Huntsman Corporation unter der Marke JEFFAMINE® vertriebenen Polyetheramine der D-, ED-, EDR- und T- Serien, wobei die D-Serien Diamine und die T-Serie Triamine umfassen, die E-Serien Verbindungen umfassen, die ein Gerüst aufweisen, das im Wesentlichen aus Polyethylenglykol besteht, und die R-Serien hoch-reaktive Amine umfassen.

Die Produkte der D-Serien umfassen Amino-terminierte Polypropylenglykole der allgemeinen Formel (II), 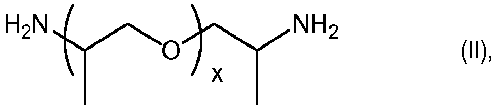 in der x eine Zahl mit einem Mittelwert zwischen 2 und 70 ist. Kommerziell erhältliche Produkte aus dieser Serie sind JEFFAMINE® D-230 (n ~ 2,5 / Mw 230), JEFFAMINE® D-400 (n ∼ 6,1 / Mw = 430), JEFFAMINE® D-2000 (n ~ 33 / Mw 2.000) und JEFFAMINE® D-4000 (n ~ 68 / MW 4.000).

Die Produkte der ED-Serien umfassen Amino terminierte Polyether auf der Basis eines im Wesentlichen Polyethylenglykol-Gerüstes mit der allgemeinen Formel (III), 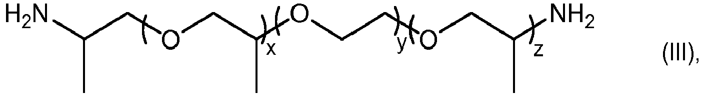 in der y eine Zahl mit einem Mittelwert zwischen 2 und 40 ist und x +z eine Zahl mit einem Mittelwert zwischen 1 und 6 ist. Kommerziell erhältliche Produkte aus dieser Serie sind: JEFFAMINE® HK511 (y = 2,0; x + z ∼ 1,2 / Mw 220), JEFFAMINE® ED-600 (y ∼ 9,0; x + z ~3,6 / Mw 600), JEFFAMINE® ED-900 (y ∼ 12,5; x + z ∼ 6,0 / Mw 900) und JEFFAMINE® ED-2003 (y ∼ 39; x + z ∼ 6,0 / Mw 2.000).

Die Produkte der EDR-Serien umfassen Amino terminierte Polyether mit der allgemeinen Formel (IV) 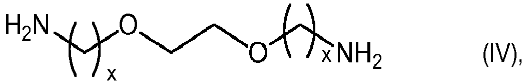 in der x eine ganze Zahl zwischen 1 und 3 ist. Kommerziell erhältliche Produkte aus dieser Serie sind: JEFFAMINE® DER-148 (x = 2 / Mw 148) und JEFFAMINE® DER-176 (x = 3 / Mw 176).

Die Produkte der T-Serien umfassen Triamine, die durch Reaktion von Propylenoxid mit einem Triol-Initiator und anschließender Aminierung der terminalen Hydroxylgruppen erhalten werden und die allgemeine Formel (V) aufweisen oder Isomere davon 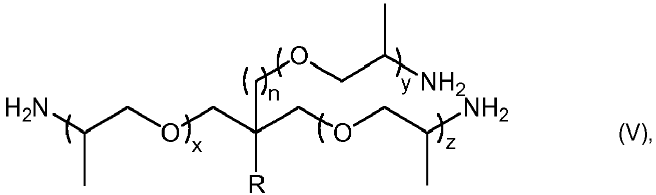 in der R Wasserstoff oder eine C₁-C₄-Alkylgruppe, bevorzugt Wasserstoff oder Ethyl ist, n 0 oder 1 ist und x + y + z die Anzahl der Mole an Propylenoxideinheiten entspricht, wobei x + y + z eine ganze Zahl zwischen etwa 4 und etwa 100, insbesondere zwischen etwa 5 und etwa 85 ist. Kommerziell erhältliche Produkte aus dieser Serie sind: JEFFAMINE® T-403 (R = C₂H₅; n = 1; x + y + z = 5-6 / Mw 440), JEFFAMINE® T-3000 (R = H; n = 0; x + y + z = 50 / Mw 3.000) und JEFFAMINE® T-5000 (R = H; n = 0; x + y + z = 85 / Mw 5.000).

Ferner sind die sekundären Amine der SD- und der ST-Serien geeignet, wobei die SD-Serien sekundäre Diamine und die ST-Serien sekundäre Triamine umfassen, die aus den obigen Serien durch reduktive Alkylierung der Aminogruppen erhalten werden, in dem die Amino-Endgruppen mit einem Keton, z.B. Aceton umgesetzt und anschließend reduziert werden, so dass sterisch gehinderte sekundäre Amino-Endgruppen mit der allgemeinen Formel (VI) erhalten werden

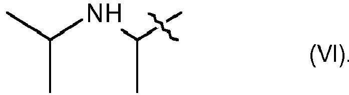

Kommerziell erhältliche Produkte aus dieser Serie sind: JEFFAMINE® SD-231 (Ausgangsprodukt D230 / Mw 315), JEFFAMINE® SD-401 (Ausgangsprodukt D-400 / Mw 515), JEFFAMINE® SD-2001 (Ausgangsprodukt D-2000 / Mw 2050) und JEFFAMINE ST-404 (Ausgangsprodukt T-403 / Mw 565).

In einer besonders bevorzugten Ausführungsform der Erfindung werden als gegenüber Isocyanatverbindungen reaktionsfähige Reaktivkomponente Polyasparaginsäureester, die sogenannten Polyaspartics, verwendet, da deren Reaktivität gegenüber Isocyanatgruppen verglichen mit den oben beschriebenen anderen Polyaminen deutlich reduziert ist. Dies führt zu dem Vorteil, dass die Verarbeitungszeit einer Zusammensetzung mit einem Isocyanat-Bestandteil und einem Polyasparaginsäureester-Bestandteil verlängert wird, was zu einer besseren Handhabbarkeit durch den Anwender führt.

Geeignete Polyasparaginsäureester sind unter Verbindungen der allgemeinen Formel (VII) ausgewählt, 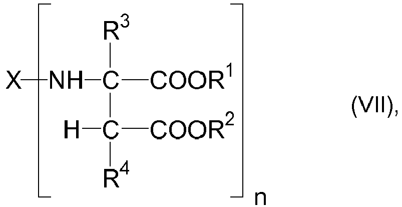 in der R¹ und R² gleich oder verschieden sein können und für organische Reste stehen, die gegenüber Isocyanatgruppen inert sind, R³ und R⁴ gleich oder verschieden sein können und für Wasserstoff oder organische Reste stehen, die gegenüber Isocyanatgruppen inert sind, X für einen n-wertigen organischen Rest steht, der gegenüber Isocyanatgruppen inert ist, und n für eine ganze Zahl von mindestens 2, bevorzugt von 2 bis 6, mehr bevorzugt von 2 bis 4 und am meisten bevorzugt von 2 steht. R¹ und R² stehen bevorzugt unabhängig voneinander für eine, gegebenenfalls substituierte Kohlenwasserstoffgruppe, bevorzugt eine C₁-C₉-Kohlenwasserstoffgruppe und mehr bevorzugt eine Methyl-, Ethyl- oder Butylgruppe und R³ und R⁴ stehen bevorzugt jeweils für Wasserstoff.

In einer Ausführungsform steht X für eine n-wertige Kohlenwasserstoffgruppe, die durch Entfernen der Aminogruppen von einem aliphatischen oder araliphatischen Polyamin, bevorzugt durch Entfernen der primären Aminogruppen aus einem aliphatischen Polyamin, besonders bevorzugt Diamin erhalten wird. Der Begriff Polyamin umfasst in diesem Zusammenhang Verbindungen mit zwei oder mehreren primären und gegebenenfalls zusätzlichen sekundären Aminogruppen, wobei die primären Aminogruppen bevorzugt endständig sind.

In einer bevorzugten Ausführungsform steht X für einen Rest, wie er durch Entfernen der primären Aminogruppen aus 1,4-Diaminobutan, 1,6-Diaminohexan, 2,2,4- oder 2,4,4-Trimethyl-1,6-diaminohexan, 1-Amino-3,3,5-trimethyl-5-amionmethyl-cyclohexan, 4,4'-Diamino-dicyclohexylmethan oder 3,3'-Dimethyl-4,4'-diamino-dicyclohexylmethan, Diethylentriamin und Triethylentetramin erhalten wird und wobei n in Formel (VII) für die Zahl 2 steht.

In diesem Zusammenhang wird Bezug genommen auf die Anmeldung EP 0 403 921 A2 und EP 0 743 332 A1, deren Inhalte hiermit in diese Anmeldung aufgenommen werden.

Gemische von Polyasparaginsäureestern können ebenfalls verwendet werden.

Beispiele geeigneter Polyasparaginsäureester werden von Bayer MaterialScience AG unter der Marke DESMOPHEN® vertrieben. Kommerziell erhältliche Produkte sind beispielsweise: DESMOPHEN® NH 1220, DESMOPHEN® NH 1420 und DESMOPHEN® NH 1520.

Die beschriebenen gegenüber Isocyanatverbindungen reaktionsfähigen Reaktivkomponenten können je nach gewünschter Reaktivität einzeln oder als Gemisch verwendet werden. Dabei können insbesondere die Polyamine als verbrückende Verbindungen dienen, wenn diese zusätzlich zu den Polyetherpolyaminen oder den Polyasparaginsäureestern verwendet werden.

Die Mengenverhältnisse der Bestandteile A und B werden bevorzugt so gewählt, dass das Äquivalentverhältnis von Isocyanatgruppen der Isocyanatverbindung zu gegenüber der Isocyanatgruppe reaktionsfähigen Gruppen der gegenüber Isocyanatverbindungen reaktionsfähigen Reaktivkomponente zwischen 0,3 und 1,7, bevorzugt zwischen 0,5 und 1,5 und stärker bevorzugt zwischen 0,7 und 1,3 liegt.

Bevorzugt wird das Polyol mit dem Polyamin, Polyetheramin oder Polyasparaginsäureester im Verhältnis OH:NH 0,05 eq : 0,95 eq bis 0,6 eq : 0,4 eq, stärker bevorzugt im Verhältnis 0,1 eq : 0,9 eq bis 0,5 eq : 0,5 eq und am stärksten bevorzugt im Verhältnis 0,2 eq : 0,8 eq bis 0,4 eq : 0,6 eq eingesetzt.

Bevorzugt ist das Polyol aufgebaut aus einem Grundgerüst aus Polyester, Polyether, Polyurethan und/oder Alkanen oder Mischungen aus diesen mit einer oder mehrerer Hydroxylgruppen. Das Grundgerüst kann linear oder verzweigt aufgebaut sein und die funktionellen Hydroxylgruppen terminal und/oder entlang der Kette enthalten.

Stärker bevorzugt sind die Polyesterpolyole ausgewählt aus Kondensationsprodukten von Di- und Polycarbonsäuren, z.B. aromatische Säuren wie Phthalsäure und Isophthalsäure, aliphatische Säuren wie Adipinsäure und Maleinsäure, cycloaliphatischen Säuren, wie Tetrahydrophthalsäure und Hexahydrophthalsäure, und/oder deren Derivaten, wie Anhydride, Ester oder Chloride, und einer überschüssigen Menge aus mehrfachfunktionellen Alkoholen, z.B. aliphatische Alkohole wie Ethandiol, 1,2-Propandiol, 1,6-Hexandiol, Neopentylglykol, Glycerin, Trimethylolpropan und cycloaliphatische Alkohole wie 1,4-Cyclohexandimethanol.

Weiterhin sind die Polyesterpolyole ausgewählt aus Polyacrylatpolyolen, wie Copolymerisate von Estern der Acryl- und/ oder Methacrylsäure, wie z.B. Ethylacrylat, Butylacrylat, Methylmethacrylat mit zusätzlichen Hydroxylgruppen, und Styrol, Vinylester und Maleinsäureester. Die Hydroxylgruppen in diesen Polymeren werden über funktionalisierte Ester der Acryl- und Methacrylsäure, z.B. Hydroxyethylacrylat, Hydroxyethylmethacrylat und/ oder Hydroxypropylmethacrylat eingeführt.

Weiterhin sind die Polyesterpolyole ausgewählt aus Polycarbonatpolyolen. Verwendbare Polycarbonatpolyole sind Hydroxylgruppen aufweisende Polycarbonate, zum Beispiel Polycarbonatdiole. Diese sind durch Reaktion von Kohlensäure oder Kohlensäurederivaten mit Polyolen oder durch die Copolymerisation von Alkylenoxiden, wie zum Beispiel Propylenoxid, mit CO₂ erhältlich. Zusätzlich oder alternativ sind die eingesetzten Polycarbonate aus linearen aliphatischen Ketten aufgebaut. Geeignete Kohlensäurederivate sind etwa Kohlensäurediester, wie z.B. Diphenylcarbonat, Dimethylcarbonat oder Phosgen. Geeignete Polyole sind etwa Diole, wie Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A und lactonmodifizierte Diole der vorstehend genannten Art.

Statt oder zusätzlich zu reinen Polycarbonatdiolen können auch Polyether-Polycarbonatdiole eingesetzt werden.

Weiterhin sind die Polyesterpolyole ausgewählt aus Polycaprolactonpolyolen, hergestellt durch ringöffnende Polymerisation von ε-Caprolacton mit mehrfachfunktionellen Alkoholen, wie Ethylenglykol, 1,2-Propandiol, Glycerin und Trimethylolpropan.

Stärker bevorzugt sind außerdem Polyetherpolyole ausgewählt aus Additionsprodukten von z.B. Ethylen- und/oder Propylenoxid und mehrfachfunktionellen Alkoholen wie z.B. Ethylenglykol, 1,2-Propandiol, Glycerin und/oder Trimethylolpropan.

Stärker bevorzugt sind außerdem Polyurethanpolyole, hergestellt aus Polyaddition von Diisocyanaten mit überschüssigen Mengen Di- und/oder Polyolen.

Stärker bevorzugt sind außerdem di- oder mehrfunktionelle Alkohole, ausgewählt aus C₂-C₁₀-Alkoholen mit den Hydroxylgruppen an den Enden und/oder entlang der Kette.

Am stärksten bevorzugt sind oben genannte Polyesterpolyole, Polyetherpolyole und C₂-C₁₀-Alkohole, die di- und/oder trifunktionell sind.

Beispiele geeigneter Polyesterpolyole umfassen DESMOPHEN® 1100, DESMOPHEN® 1652, DESMOPHEN® 1700, DESMOPHEN® 1800, DESMOPHEN® 670, DESMOPHEN® 800, DESMOPHEN® 850, DESMOPHEN® VP LS 2089, DESMOPHEN® VP LS 2249/1, DESMOPHEN® VP LS 2328, DESMOPHEN® VP LS 2388, DESMOPHEN® XP 2488 (Bayer), K-FLEX XM-360, K-FLEX 188, K-FLEX XM-359, K-FLEX A308 und K-FLEX XM-332 (King Industries).

Beispiele geeigneter kommerziell erhältlicher Polyetherpolyole umfassen: ACCLAIM® POLYOL 12200 N, ACCLAIM® POLYOL 18200 N, ACCLAIM® POLYOL 4200, ACCLAIM® POLYOL 6300, ACCLAIM® POLYOL 8200 N, ARCOL® POLYOL 1070, ARCOL® POLYOL 1105 S, DESMOPHEN® 1110 BD, DESMOPHEN® 1111 BD, DESMOPHEN® 1262 BD, DESMOPHEN® 1380 BT, DESMOPHEN® 1381 BT, DESMOPHEN® 1400 BT, DESMOPHEN® 2060 BD, DESMOPHEN® 2061 BD, DESMOPHEN® 2062 BD, DESMOPHEN® 3061 BT, DESMOPHEN® 4011 T, DESMOPHEN® 4028 BD, DESMOPHEN® 4050 E, DESMOPHEN® 5031 BT, DESMOPHEN® 5034 BT und DESMOPHEN® 5035 BT (Bayer) oder Mischungen aus Polyester- und Polyetherpolyolen wie WorléePol 230 (Worlée).

Beispiele geeigneter Alkanole umfassen Ethandiol, Propandiol, Propantriol, Butandiol, Butantriol, Pentandiol, Pentantriol, Hexandiol, Hexantriol, Heptandiol; Heptantriol, Octandiol, Octantriol, Nonandiol, Nonantriol, Decandiol und Decantriol.

Für den Fall, dass die Zusammensetzung für die gedachte Anwendung zu langsam aushärtet, insbesondere wenn Polyasparaginsäureester verwendet werden, kann der Zusammensetzung ferner ein tertiäres Amin als Katalysator zugegeben werden.

Enthält die Zusammensetzung ferner Polyole kann für den Fall, dass die Zusammensetzung für die gedachte Anwendung zu langsam aushärtet, der Zusammensetzung ferner ein Katalysator zugegeben werden, welcher unter zinnhaltigen Verbindungen, bismuthaltigen Verbindungen, einer zirkoniumhaltigen Verbindungen, aluminiumhaltigen Verbindungen oder zinkhaltigen Verbindungen ausgewählt ist. Bevorzugt handelt es sich hierbei um Zinnoctoat, Zinnoxalat, Zinnchlorid, Dioctylzinndi-(2-ethylhexanoat), Dioctylzinndithioglykolat, Dibutylzinndilaurat, Monobutylzinntris-(2-ethylhexanoat), Dioctylzinndineodecanoat, Dibutylzinndineodecanoat, Dibutylzinndiacetat, Dibutylzinnoxid, Monobutylzinndihydroxychlorid, Organozinnoxid, Monobutylzinnoxid, Dioctylzinndicarboxylat, Dioctylzinnstannoxan, Bismutcarboxylat, Bismutoxid, bismutneodecanoat, Zinkneodecanoat, Zinkoctoat, Zinkacetylacetonat, Zinkoxalat, Zinkacetat, Zinkcarboxylat, Aluminiumchelatkomplex, Zirkoniumchelatkomplex, Dimethylaminopropylamine, *N,N*-Dimethylcyclohexylamin, *N,N*-Dimethylethanolamin, *N*-(3-Dimethylaminopropyl)-*N,N*-diisopropanolamin, *N*-Ethylmorpholin, *N*-Methylmorpholin, Pentamethyldiethylentriamin und/oder Triethylendiamin.

Beispiele geeigneter Katalysatoren sind Borchi® Kat 24, Borchi® Kat 320, Borchi® Kat 15 (Borchers), TIB KAT 129, TIB KAT P129, TIB KAT 160, TIB KAT 162, TIB KAT 214, TIB KAT 216, TIB KAT 218, TIB KAT 220, TIB KAT 232, TIB KAT 248, TIB KAT 248 LC, TIB KAT 250, TIB KAT 250, TIB KAT 256, TIB KAT 318, TIB Si 2000, TIB KAT 716, TIB KAT 718, TIB KAT 720, TIB KAT 616, TIB KAT 620, TIB KAT 634, TIB KAT 635, TIB KAT 815 (TIB Chemicals), K-KAT® XC-B221, K-KAT® 348, K-KAT® 4205, K-KAT® 5218, K-KAT® XK-635, K-KAT® XK-639, K-KAT® XK-604, K-KAT® XK-618 (King Industries), JEFFCAT® DMAPA, JEFFCAT® DMCHA, JEFFCAT® DMEA, JEFFCAT® DPA, JEFFCAT® NEM, JEFFCAT® NMM, JEFFCAT® PMDETA, JEFFCAT® TD-100 (Huntsman) und DABCO 33LV (Sigma Aldrich).

Die Wirkungsweise der erfindungsgemäßen ablativ wirkenden Zusammensetzung baut auf einer endothermen physikalischen und/oder chemischen Reaktion auf, wobei Stoffe, die bei deren Zersetzung große Mengen von Energie benötigen, in der Zusammensetzung enthalten sind. Wird die ausgehärtete Zusammensetzung erhöhter Temperatur, wie etwa im Brandfall der eines Feuers ausgesetzt, wird eine Reihe von chemischen und physikalischen Prozessen in Gang gesetzt. Diese Prozesse sind etwa die Freisetzung von Wasserdampf, Veränderung der chemischen Zusammensetzung und die Bildung nichtbrennbarer Gase, die den zur Verbrennung notwendigen Sauerstoff von der Kabeloberfläche fernhalten. All diese Prozesse benötigen eine große Menge Energie, die dem Feuer entzogen wird. Nachdem die Umwandlung aller organischen Bestandteile abgeschlossen ist, hat sich eine stabile Isolationsschicht aus anorganischen Bestandteilen gebildet, die eine zusätzliche isolierende Wirkung hat.

Erfindungsgemäß enthält der Bestandteil C daher mindestens ein ablativ wirkendes Brandschutzadditiv, wobei als Additiv sowohl einzelne Verbindungen als auch ein Gemisch von mehreren Verbindungen verwendet werden kann.

Zweckmäßig werden als ablativ wirkende Brandschutzadditive solche Materialien eingesetzt, die durch Wasserabspaltung, das etwa in Form von Kristallwasser eingelagert ist, und Wasserverdampfung energieverzehrende Schichten bilden. Die Wärmeenergie, die zur Abspaltung des Wassers aufgewendet werden muss, wird dabei dem Brand entzogen. Ferner werden solche Materialien eingesetzt, die sich bei Hitzeeinwirkung in einer endothermen Reaktion chemisch verändern bzw. zersetzen, verdampfen, sublimieren oder schmelzen. Dadurch werden die beschichteten Substrate gekühlt. Häufig werden bei der Zersetzung inerte, d.h. nicht brennbare Gase wie etwa Kohlendioxid freigesetzt, welche zusätzlich den Sauerstoff in unmittelbarer Umgebung des beschichteten Substrates verdünnen.

Als gasabspaltende Bestandteile eignen sich Hydroxide, wie Aluminiumhydroxid und Magnesiumhydroxid sowie deren Hydrate, die Wasser abspalten, sowie Carbonate, wie Calciumcarbonat, die Kohlendioxid abspalten. Basische Carbonate können sowohl Wasser als auch CO₂ abspalten. Bevorzugt ist eine Kombination von bei verschiedenen Temperaturen mit der Gasabspaltung beginnenden Bestandteilen. So beginnt die Wasserabspaltung bei Aluminiumhydroxid bereits bei ca. 200°C, wogegen die Wasserabspaltung von Magnesiumhydroxid bei ca. 350°C einsetzt, so dass die Gasabspaltung über einen größeren Temperaturbereich hinweg erfolgt.

Geeignete ablativ wirkende Materialien sind, bei Hitzeeinwirkung wasserabgebende anorganische Hydroxide oder Hydrate, wie solche von Natrium, Kalium, Lithium, Barium, Calcium, Magnesium, Bor, Aluminium, Zink, Nickel, ferner Borsäure und deren teilentwässerte Derivate.

Beispielhaft können folgende Verbindungen genannt werden: LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierte Kohlen und Graphite, Kieselsäuren.

In einer bevorzugten Ausführungsform sind die hydrierten Salze ausgewählt aus der Gruppe bestehend aus Al₂(SO₄)·16-18H₂O, NH₄Fe(SO₄)₂·12H₂O, Na₂B₄O₇·10H₂O, NaAl(SO₄)₂·12H₂O, AlNH₄(SO₄)₂·12-24H₂O, Na₂SO₄·10H₂O, MgSO₄·7H₂O, (NH₄)₂SO₄·12H₂O; KAl(SO₄)₂·12H₂O, Na₂SiO₃·9H₂O, Mg(NO₂)₂·6H₂O, Na₂CO₃·7H₂O und Gemischen davon (EP1069172A).

Besonders bevorzugt sind Aluminiumhydroxid, Aluminiumhydroxidhydrate, Magnesiumhydroxid und Zinkborat, da sie eine Aktivierungstemperatur unterhalb 180°C haben.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate und Addukte. Solche Verbindungen sind beispielsweise beschrieben in S. V Levchik, E. D Weil, Polym. Int. 2004, 53, 1901-1929 oder E. D. Weil, S. V. Levchik (Hrsg.), Flame Retardants for Plastics and Textiles - Practical Applications, Hanser, 2009.

Das ablativ wirkende Brandschutzadditiv kann in einer Menge von 5 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst gute Isolation zu bewirken, wird der Anteil des Bestandteils C in der Gesamtformulierung so hoch wie möglich eingestellt. Bevorzugt beträgt der Anteil des Bestandteils C in der Gesamtformulierung 5 bis 85 Gew.-% und besonders bevorzugt 40 bis 80 Gew.-%.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer Phosphorsäurederivate, Ketoxime, Aminsalze der p-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU-und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder Mehrkomponenten-System konfektioniert werden.

Da eine Reaktion bei Raumtemperatur eintritt, müssen der Bestandteil A und der Bestandteil B reaktionsinhibierend getrennt angeordnet werden. In Anwesenheit eines Katalysators kann dieser entweder getrennt von den Bestandteilen A und B gelagert werden oder kann in einem dieser Bestandteile oder aufgeteilt auf beide Bestandteile enthalten sein. Hierdurch wird erreicht, dass die beiden Komponenten A und B des Bindemittels erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Der Bestandteil C kann dabei als Gesamtmischung oder in Einzelkomponenten aufgeteilt in einer ersten Komponente I und/oder einer zweiten Komponente II enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Die Zusammensetzung wird als Paste mit einem Pinsel, einer Rolle oder durch Sprühen auf das Substrat aufgebracht. Dass Substrat kann dabei metallisch sein oder aus einem anderen, nicht metallischen Material bestehen, wie etwa Kunststoff im Fall von Kabeln oder aus Mineralwolle im Fall von Weichschotts, oder aus einer Materialkombination, etwa aus metallischen und nicht metallischen Materialien, wie im Fall von Kabeltrassen. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige physikalische Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, was in lösemittel- oder wasserbasierten Systemen zu einem Auswaschen von wasserlöslichen Bestandteilen führen kann, bzw. bei der Aufnahme von Staub zu einer reduzierten ablativen Wirkung. Durch die geringe Viskosität der Zusammensetzung trotz des hohen Feststoffanteils, der ohne die Zugabe leicht flüchtiger Lösemittel bis zu 99 Gew.-% in der Zusammensetzung betragen kann, bleibt die Zusammensetzung einfach zu verarbeiten, insbesondere durch gängige Sprühverfahren.

Deshalb ist die erfindungsgemäße Zusammensetzung insbesondere als Brandschutzbeschichtung, insbesondere sprühbare Beschichtung für Bauteile auf metallischer und nicht metallischer Basis geeignet. Die erfindungsgemäße Zusammensetzung findet vor allem im Baubereich als Beschichtung, insbesondere Brandschutzbeschichtung für einzelne Kabel, Kabelbündel, Kabeltrassen und Kabelkanäle oder andere Leitungen Verwendung sowie als Brandschutzbeschichtung für Stahlkonstruktionselemente, aber auch für Konstruktionselemente aus anderen Materialien, wie Beton oder Holz.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung für einzelne Kabel, Kabelbündel, Kabeltrassen und Kabelkanäle oder andere Leitungen oder Weichschotts.

Die vorliegende Erfindung betrifft auch Objekte, die erhalten werden, wenn die erfindungsgemäße Zusammensetzung ausgehärtet ist. Die Objekte haben ausgezeichnete ablative Eigenschaften.

Die folgenden Beispiele dienen der weiteren Erläuterung der Erfindung.

### AUSFÜHRUNGSBEISPIELE

Für die Herstellung von erfindungsgemäßen ablativ wirkenden Zusammensetzungen verwendet man die nachfolgend aufgelisteten Bestandteile. Es werden jeweils die Einzelkomponenten mit Hilfe eines Dissolvers vermengt und homogenisiert. Für die Anwendung werden diese Mischungen dann entweder vor dem Versprühen oder während des Versprühens vermischt und appliziert.

Zur Bestimmung der Brandschutzeigenschaften wurde die ausgehärteten Zusammensetzung einer Prüfung nach EN ISO 11925-2 unterzogen, wobei die Entzündlichkeit und das Abtropfverhalten nach der CEN/TS 45545-2 bestimmt wird (HTC SFS-Test). Die Prüfung erfolgt in einem zugfrei aufgestellten Brennkasten Mitsubishi FR-D700SC Electric Inverter. Bei der Prüfung wird im Winkel von 45° eine Kleinbrennerflamme für 30 s auf die Probenoberfläche gerichtet, dies entspricht einer Flächenbeflammung.

Es werden jeweils Proben mit den Abmessungen 11 cm x 29,5 cm und einer Anwendungsdicke von 1 mm verwendet. Diese Proben härteten bei Raumtemperatur aus und wurden drei Tage bei 40°C gealtert.

Nach der Alterung von drei Tagen bei 40°C erfolgt die Überprüfung von Entzündlichkeit und Höhe der angegriffenen Fläche.

Die Aushärtungszeit und der Aushärtungsverlauf wurden bestimmt. Dabei wurde mit einem Spatel getestet, wann die Aushärtung der Beschichtung startet.

Für die folgenden Beispiele 1 und 2 wurde als Bestandteil C Aluminiumtrihydrat (HN 434 der J.M. Huber Corporation, Finnland) verwendet, wobei jeweils 15 g davon verwendet wurden.

### Beispiel 1

### Bestandteil A

| **Bestandteil** | **Menge [g]** |
|---|---|
| Desmophen® NH 1420 ¹⁾ | 34,5 |
| 1-Decanol | 8,5 |
| Calciumcarbonat | 45,0 |

| | |
|---|---|
| ¹⁾ Polyasparticester auf Basis eines cycloaliphatischen Amins (Aminzahl 199-203 mg KOH/g (M129-AFAM 2011-06054); Viskosität (25°C) 900-2.000 mPa·s (M068-DIN 53019); Äquivalentgewicht 276 g/eq) | |

### Bestandteil B

| **Bestandteil** | **Menge [g]** |
|---|---|
| Desmodur N 3900 ²⁾ | 32,0 |
| Calciumcarbonat | 15,0 |

| | |
|---|---|
| ²⁾ niedrigviskoses, aliphatische Polyisocyanat-Harz auf Basis Hexamethylendiisocyanat (NCO-Gehalt 23,5±0,5 Gew.-% (DIN EN ISO 11 909); Viskosität (23°C) 730±100 mPa·s (DIN EN ISO 3219/A.3); Äquivalentgewicht ca. 179 g/eq) | |

### Beispiel 2

### Bestandteil A

| **Bestandteil** | **Menge [g]** |
|---|---|
| Desmophen NH 1420 | 31,4 |
| Polyglykol 600 | 14,6 |
| Calciumcarbonat | 45 |

### Bestandteil B

| **Bestandteil** | **Menge [g]** |
|---|---|
| Desmodur N 3900 | 29,1 |
| Calciumcarbonat | 15,0 |

### Vergleichsbeispiel 1

Als Vergleich diente ein auf wässriger Dispersionstechnologie (Acrylatdispersion) basiertes kommerzielles Brandschutzprodukt (Hilti CFS SP-WB).

**Tabelle 1: Ergebnisse der Bestimmung der Aushärtungszeit, der Entzündung und der Flammenhöhe**

| **Beispiel** | **Vergleich 1** | **1** | **2** |
|---|---|---|---|
| Aushärtungszeit | 24 h | 30 min | 14 min |
| Entzündung | ja | ja | ja |
| Flammenhöhe | 150 mm | 110 mm | 30 mm |

## Patentansprüche

1. Brandschutz-Zusammensetzung mit einem Bestandteil A, der eine Isocyanatverbindung enthält, mit einem Bestandteil B, der eine gegenüber Isocyanatverbindungen reaktionsfähige Reaktivkomponente enthält, die unter Verbindungen mit mindestens zwei Aminogruppen ausgewählt ist, wobei die Aminogruppen unabhängig voneinander primäre und/oder sekundäre Aminogruppen sind, und mit einem Bestandteil C, der ein ablativ wirkendes Brandschutzadditiv enthält.

2. Zusammensetzung nach Anspruch 1, wobei die gegenüber Isocyanatverbindungen reaktionsfähige Reaktivkomponente unter Polyaminen, Polyetherpolyaminen und Polyasparaginsäureestern oder einem Gemisch davon ausgewählt ist.

3. Zusammensetzung nach Anspruch 2, wobei die gegenüber Isocyanatverbindungen reaktionsfähige Reaktivkomponente ein Polyetherpolyamin ist, welches unter Verbindungen der allgemeinen Formeln (I) ausgewählt ist 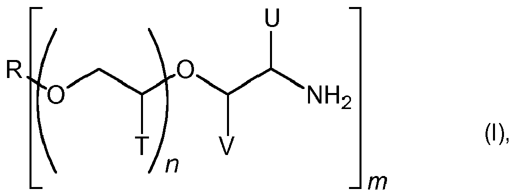 in der
R der Rest eines Initiators für die Oxyalkylierung ist mit 2 bis 12 Kohlenstoffatomen und 2 bis 8 Gruppen mit aktiven Wasserstoffatomen,
T Wasserstoff oder eine C₁-C₄-Alkylgruppe darstellt,
V und U unabhängig voneinander Wasserstoff oder T sind,
n ein Wert zwischen 0 und 100 ist,
m eine ganze Zahl zwischen 2 und 8 ist, wobei m der Anzahl der Gruppen mit einem aktiven Wasserstoffatom entspricht, die ursprünglich in dem Initiator für die Oxyalkylierung enthalten waren.

4. Zusammensetzung nach Anspruch 2, wobei die gegenüber Isocyanatverbindungen reaktionsfähige Reaktivkomponente ein Polyasparaginsäureester der allgemeinen Formel (VII) ist, 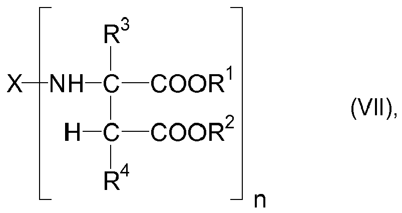 in der
R¹ und R² gleich oder verschieden sein können und für organische Reste stehen, die gegenüber Isocyanatgruppen inert sind,
R³ und R⁴ gleich oder verschieden sein können und für Wasserstoff oder organische Reste stehen, die gegenüber Isocyanatgruppen inert sind,
X für einen n-wertigen organischen Rest steht, der gegenüber Isocyanatgruppen inert ist, und
n für eine ganze Zahl von mindestens 2 steht.

5. Zusammensetzung nach Anspruch 4, wobei in Formel (VII) R¹ und R² unabhängig voneinander für eine Methyl- oder Ethylgruppe und R³ und R⁴ jeweils für Wasserstoff stehen.

6. Zusammensetzung nach Anspruch 4 oder 5, wobei in Formel (VII) X für einen Rest steht, wie er durch Entfernung der primären Aminogruppen aus einem aliphatischen Polyamin erhalten wird.

7. Zusammensetzung nach einem der vorhergehenden Ansprüche, wobei der Bestandteil B ferner eine Polyolverbindung enthält.

8. Zusammensetzung nach Anspruch 7, wobei die Polyolverbindung unter Polyesterpolyolen, Polyetherpolyolen, hydroxylierten Polyurethanen und/oder Alkanen mit jeweils mindestens zwei Hydroxylgruppen pro Molekül ausgewählt ist.

9. Zusammensetzung nach einem der vorhergehenden Ansprüche, wobei die Isocyanatverbindung ein aliphatisches oder aromatisches Grundgerüst und mindestens zwei Isocyanatgruppen oder ein Gemisch davon umfasst.

10. Zusammensetzung nach einem der vorhergehenden Ansprüche, wobei die Mengenverhältnisse der Bestandteile A und B so gewählt sind, dass das Äquivalentverhältnis von Isocyanatgruppen der Isocyanatverbindung zu gegenüber der Isocyanatgruppe reaktionsfähigen Gruppen der gegenüber Isocyanatverbindungen reaktionsfähigen Reaktivkomponente zwischen 0,3 und 1,7 liegt.

11. Zusammensetzung nach einem der vorhergehenden Ansprüche, die ferner einen Katalysator für die Reaktion zwischen der Isocyanatverbindung und der gegenüber Isocyanatverbindungen reaktionsfähigen Reaktivkomponente und/oder dem Polyol enthält.

12. Zusammensetzung nach einem der vorhergehenden Ansprüche, wobei das wenigstens eine ablativ wirkende Brandschutzadditiv aus der Gruppe ausgewählt ist, bestehend aus LiNO₃·3H₂O, Na2CO3H2O (Thermonatrit), Na₂CO₃·7H₂O, Na₂CO₃·10H₂O (Soda), Na₂Ca(CO₃)₂·2H₂O (Pirssonit), Na₂Ca(CO₃)₂·5H₂O (Gaylussit), Na(HCO₃)Na₂CO₃·2H₂O (Trona), Na₂S₂O₃·5H₂O, Na₂O₃Si·5H₂O, KF·2H₂O, CaBr₂·2H₂O, CaBr₂·6H₂O, CaSO₄·2H₂O (Gips), Ca(SO₄)·½H₂O (Bassanit), Ba(OH)₂·8H₂O, Ni(NO₃)₂·6H₂O, Ni(NO₃)₂·4H₂O, Ni(NO₃)₂·2H₂O, Zn(NO₃)₂·4H₂O, Zn(NO₃)₂·6H₂O, (ZnO)₂(B₂O₃)₂·3H₂O, Mg(NO₃)₂·6H₂O (US 5985013 A), MgSO₄·7H₂O (EP1069172A), Mg(OH)₂, Al(OH)₃, Al(OH)₃·3H₂O, AIOOH (Böhmit), Al₂[SO₄]₃·nH₂O mit n = 14 - 18 (US 4,462,831 B), gegebenenfalls im Gemisch mit AlNH₄(SO₄)₂·12H₂O (US5104917A), KAl(SO₄)₂·12H₂O (EP1069172A), CaO·Al₂O₃·10H₂O (Nesquehonit), MgCO₃·3H₂O (Wermlandit), Ca₂Mg₁₄(Al,Fe)₄CO₃(OH)₄₂·29H₂O (Thaumasit), Ca₃Si(OH)₆(SO₄)(CO₃)·12H₂O (Artinit), Mg₂(OH)₂CO₃·H₂O (Ettringit), 3CaO·Al₂O₃·3CaSO₄·32H₂O (Hydromagnesit), Mg₅(OH)₂(CO₃)₄·4H₂O (Hydrocalumit), Ca₄Al₂(OH)₁₄·6H₂O (Hydrotalkit), Mg₆Al₂(OH)₁₆CO₃·4H₂O Alumohydrocalcit, CaAl₂(OH)₄(CO₃)₂·3H₂O Scarbroit, Al₁₄(CO₃)₃(OH)₃₆ Hydrogranat, 3CaO·Al₂O₃·6H₂O Dawsonit, NaAl(OH)CO₃, wasserhaltige Zeolithe, Vermikulite, Colemanit, Perlite, Glimmer, Alkalisilikate, Borax, modifizierten Kohlen, Graphiten, Kieselsäuren und Gemischen davon.

13. Zusammensetzung nach einem der vorhergehenden Ansprüche, wobei die Zusammensetzung ferner organische und/oder anorganische Zuschlagstoffe und/oder weitere Additive enthält.

14. Zusammensetzung nach einem der vorhergehenden Ansprüche, die als Zwei- oder Mehrkomponenten-System konfektioniert ist.

15. Verwendung der Zusammensetzung nach einem der Ansprüche 1 bis 14 als Beschichtung.

16. Verwendung nach Anspruch 15 für die Beschichtung von Konstruktionselementen.

17. Verwendung nach Anspruch 15 für die Beschichtung von nicht metallischen Konstruktionselementen.

18. Verwendung nach einem der Ansprüche 15 bis 17 als Brandschutzschicht, insbesondere für einzelne Kabel, Kabelbündel, Kabeltrassen und Kabelkanäle oder andere Leitungen oder Weichschotts.

19. Gehärtete Objekte, erhalten durch Härten der Zusammensetzung nach einem der Ansprüche 1 bis 14.
